# EUROPEAN PATENT APPLICATION

(11) **EP 2 219 380 A2**
(43) Date of publication of application: **18.08.2010**
(21) Application number: 10152614.3
(22) Date of filing: 04.02.2010
(51) Int. Cl.: H04N 7/24

(54) **Personal TV gateway STB / router**

(30) Priority: 05.02.2009 US 150051 P
(71) Applicant: VBOX COMMUNICATIONS LTD., 46733 Herzliya (IL)
(72) Inventor: Turgeman, Shlomo, 52960 Ramat Efal (IL); Nevo, Moti, 48571 Rosh Ha'ain (IL)
(74) Representative: Lecomte, Didier

(57) **Abstract**

A method for routing TV content including using a personal TV gateway STB/router to route a first TV content to a first TV receiver located in a first location in a home, while simultaneously routing a second TV content to a second TV receiver located in a second location in the home, and commanding the personal TV gateway STB/router to transfer the first TV content from the first TV receiver in the first location to a mobile personal communication device, while still controlling routing the second TV content to the second TV receiver located in the second location.

## Description

This application claims priority under 35 USC §119 to U.S. Provisional Patent Application, Serial No. 61/150,051, filed February 5, 2009, which is incorporated herein by reference.

### FIELD OF THE INVENTION

The present invention relates to systems and methods for routing TV signals from a variety of sources to computers and personal communication devices, including mobile and residential communication devices.

### BACKGROUND OF THE INVENTION

Many devices exist that serve as a gateway for home use. The devices connect a LAN (local area network) to a WAN (wide area network), such as the Internet, through various connections, such as DSL (digital subscriber line), cable modem, broadband mobile phone network, or other connections.

These gateway devices have variable configuration capabilities of the user's choice, multiple interfaces, multi-service perceiving, and many other capabilities.

### SUMMARY OF THE INVENTION

The present invention seeks to provide improved systems and methods for routing TV signals from a variety of sources to computers and personal communication devices, as is described more in detail hereinbelow.

As is well known in the art, routers and set top boxes (STBs) receive TV signals from a variety of sources, such as cable and satellite to name a few, and process and direct the signals to television sets, computers and the like. The present invention provides novel functionality not seen in the prior art.

In the prior art the TV content enters the STB or router and can be viewed with a variety of viewing devices located at different places, such as the TV in the living room downstairs, the TV in the bedroom upstairs, a computer in the playroom, or mobile personal communication devices. However, the user lacks certain capability of managing the viewing devices and controlling which content is shown at which viewing device at all times, as will be explained in the following example.

The present invention includes a personal TV gateway STB/router that enhances the content management capability. For example, the personal TV gateway STB/router can route a first TV content (e.g., the Super Bowl game) to the TV in the living room downstairs, while simultaneously routing a second TV content (e.g., an old Heidi movie) to the TV in the bedroom upstairs (and other TV content to other devices). Suppose the viewer of the first content has to leave the house (e.g., is forced to go to the supermarket to buy needed groceries and save his marriage) but wishes to continue watching the TV content. In the prior art, if his mobile personal communication device (such as NOKIA SYMBIAN OS, BLACKBERRY OS, WINDOWS MOBILE or PALM OS based devices) supports Internee streamed TV content, he can continue to watch the TV content but it has nothing to do with the router or STB back at home. He must separately cause the TV content to be displayed on his mobile personal communication device. In the present invention, the user commands the personal TV gateway STB/router to transfer the first TV content from the TV in the living room downstairs to the mobile personal communication device. The personal TV gateway STB/router can be controlled and programmed to follow the user wherever he is - e.g., to turn off the content at the TV in the living room and transfer the content to the mobile personal communication device and to re-transfer it from the mobile personal communication device to the TV in another place in the home when the user returns home. All the while, the personal TV gateway STB/router continues to control the TV content to the rest of the devices in the home and/or other mobile personal communication devices.

### BRIEF DESCRIPTION OF THE DRAWINGS

These and additional constructional features and advantages of the invention will be more readily understood in the light of the ensuing description of embodiments thereof, given by way of example only, with reference to the accompanying drawing wherein:
Fig. 1 is a simplified pictorial block diagram of a personal TV gateway STB/router system, in accordance with an embodiment of the present invention, being used in conjunction with a home gateway/router;
Fig. 2 is a simplified pictorial block diagram of components of the personal TV gateway STB/router of Fig. 1, in accordance with an embodiment of the present invention;
Fig. 3 is a simplified pictorial block diagram of a personal Home DVB gateway overview of DVB gateway architecture solution for home reception of TV, in accordance with an embodiment of the present invention;
Fig. 4 is a simplified pictorial block diagram of components of the system of Fig. 3, in accordance with an embodiment of the present invention;
Figs. 5A and 5B are simplified pictorial block diagrams of a home network tuner broadcast TV on any platform, Fig. 5A being in accordance with an embodiment of the present invention and Fig. 5B being the prior art;
Fig. 6 is a simplified pictorial block diagram of a solution for residential building reception of TV, in accordance with an embodiment of the present invention;
Fig. 7 is a simplified pictorial block diagram of using the IGMP (Internet Group Management Protocol) with a router in the prior art; and
Fig. 8 is a simplified pictorial block diagram of using functional operations of IGMP (IPv4)/MLD (Multicast Listener Discovery) (IPv6) to trigger tuning for broadcast live TV and/or multicast streaming, in accordance with an embodiment of the present invention.

### DETAILED DESCRIPTION OF EMBODIMENTS

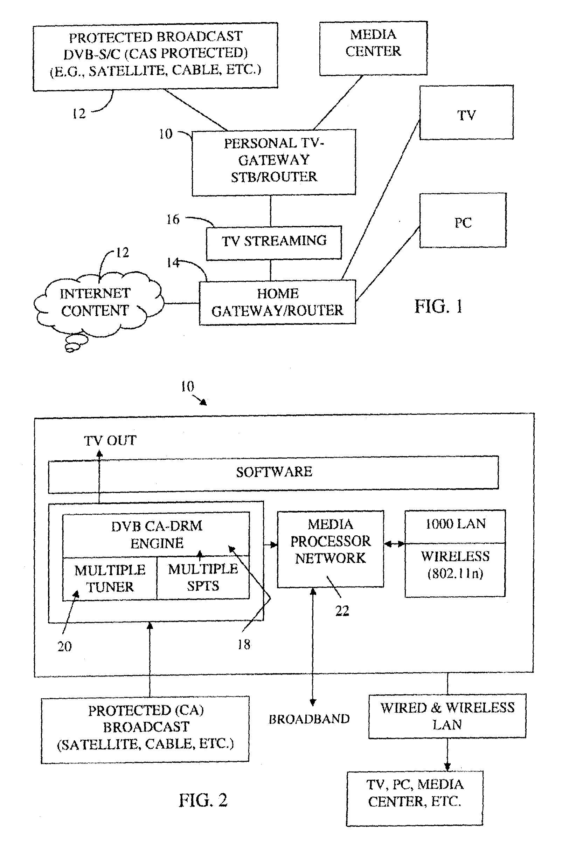

Reference is now made to Fig. 1, which illustrates a personal TV gateway STB/router 10, in accordance with an embodiment of the present invention.

TV content 12 may be received form a variety of sources, such as but not limited to, cable, satellite, Internet, etc. The personal TV gateway STB/router 10 can be used in conjunction with a home gateway/router 14, and can use any communication protocol and system, such as but not limited to, a DRM (digital rights management) server, which may be in communication with servers or processors for communicating encryption keys and entitlement information, and a TV streaming device 16 that enables remote viewing of cable, satellite, or personal video recorder (PVR) programming from an internet-enabled computer with a broadband Internet connection.

Reference is now made to Fig. 2, which illustrates components of the personal TV gateway STB/router of Fig. 1, in accordance with an embodiment of the present invention. The personal TV gateway STB/router includes a DVB (Digital Video Management) CA-DRM (Conditional Access- Digital Rights Management) engine 18, multiple tuner 20, media network processor 22 and LAN connections, for example. Fig. 2 can also be considered an illustration of an enabled residential building DVB gateway.

The DVB CA-DRM engine 18 receives the TV contents (e.g., first and second TV contents) from the multiple tuner 20 or other TV content sources, and communicates the TV contents to the media network processor 22. In the example described above in the summary, the media network processor 22 can transfer the first TV content from the first TV receiver in the first location to the mobile personal communication device, while still controlling routing the second TV content to the second TV receiver located in the second location.

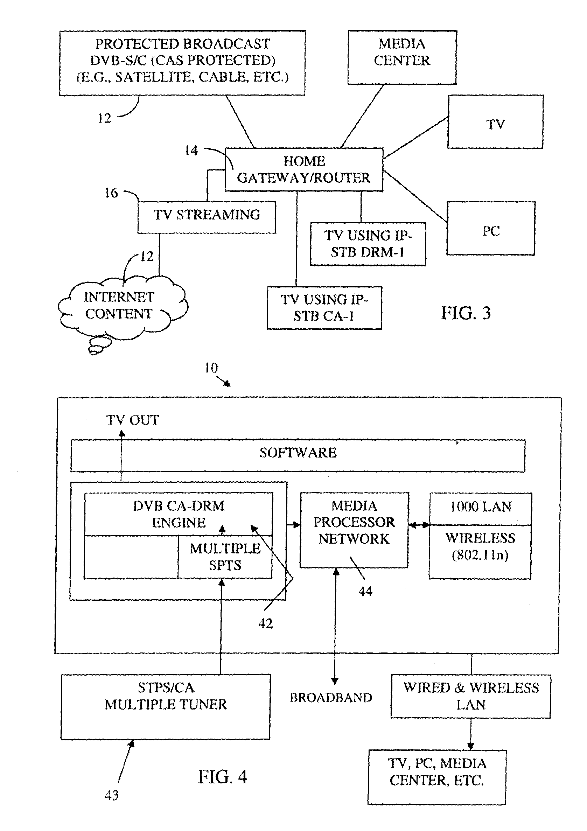

Reference is now made to Fig. 3, which illustrates a personal Home DVB gateway overview of DVB gateway architecture solution for home reception of TV, in accordance with an embodiment of the present invention. TV content can be viewed at a variety of devices and locations, such as but not limited to, watching TV using an IP-STB DRM, media center PC, etc.

Reference is now made to Fig. 4, which illustrates components of the system of Fig. 3, in accordance with an embodiment of the present invention. The personal TV gateway STB/router includes a DVB CA-DRM engine 42, multiple tuner 43, media network processor 44 and LAN connections, for example.

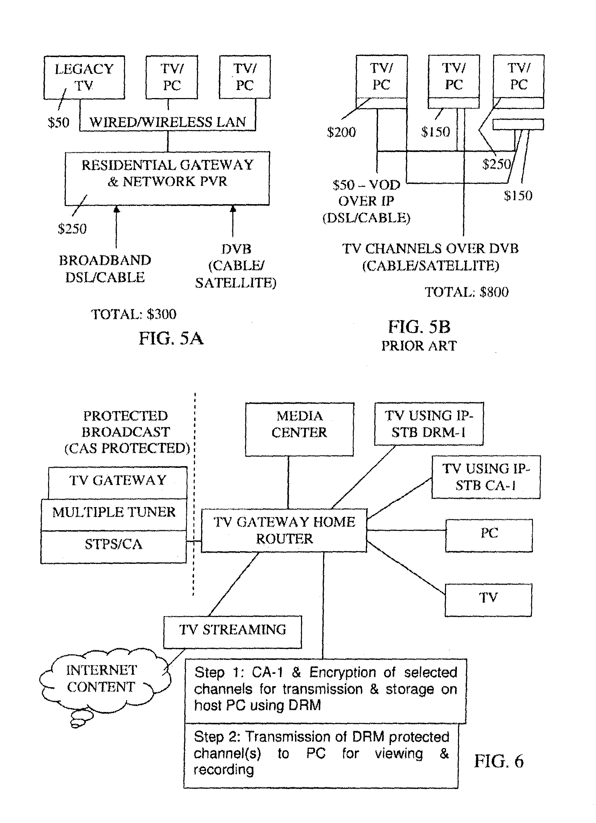

Reference is now made to Figs. 5A-5B, which illustrate a home network tuner broadcast TV on any platform, in accordance with an embodiment of the present invention as compared with the prior art, respectively. The costs savings are significant over the prior art.

Reference is now made to Fig. 6, which illustrates a solution for residential building reception of TV, in accordance with an embodiment of the present invention. First, the system can perform encryption of selected channels for transmission and storage on host personal computer(s) using DRM. Then the system transmits DRM-protected channel(s) to the PC(s) for viewing and/or recording.

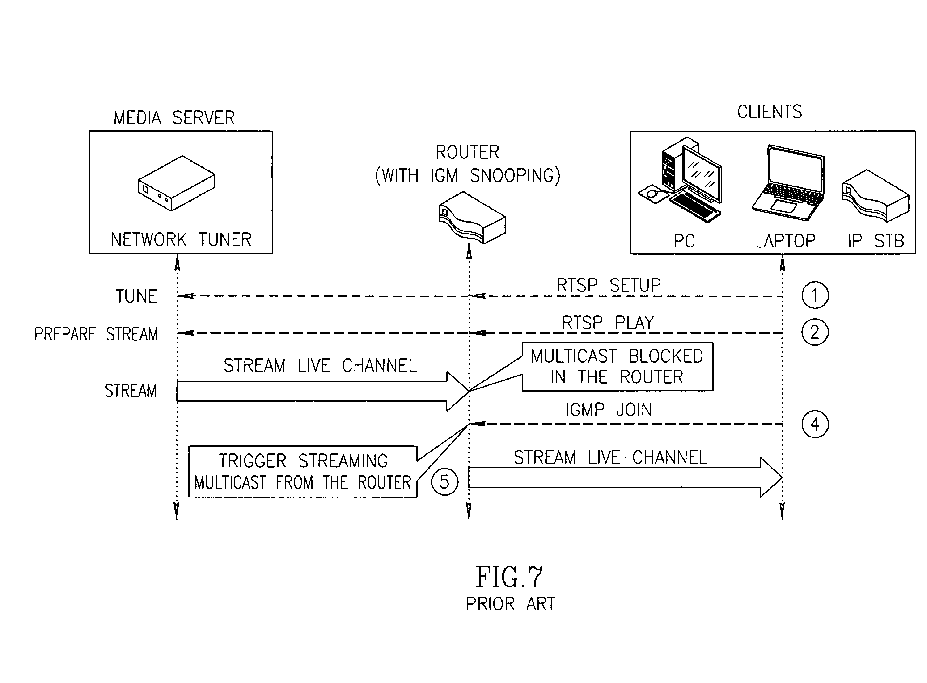

Reference is now made to Fig. 7, which illustrates using the IGMP (Internet Group Management Protocol) with a router in the prior art.

The IGMP (IPv4)/MLD (IPv6) protocol is intended for router only. In the prior art, the server sends multicast packets to the network whether or not a listener exists or not. (Multicast refers to the simultaneous broadcasting to several work stations, controlled by router trough the IGMP/MLD protocols.)

The router is responsible to route (forward) the packets to a specific port if a listener exists (i.e., the router has received a JOIN request from this port for the specific Multicast group); if no listener exists (or all of them have issued a LEAVE request) the packets are dropped. "Network Tuner"/ "Live Media sever" in the network is able to treat the IGMP messages as dedicated control messages to switch live channels.

By monitoring the ICMP (IPv4)/MLD (IPv6) JOIN and LEAVE requests an interceptor module (in kernel or user space) within the Network Tuner can trigger functional operations. By doing that, the JOIN request is not only operated as a message for the router to forward specific receive Multicast group packets, the JOIN request also operates as a control mechanism that instructs the interceptor to do some action such as actually sending the stream/packets, and in the same manner the LEAVE message instructs to stop streaming. Moreover, by interception of a JOIN request, the interceptor triggers full tuning and then streaming, and by interception of a LEAVE request, the interceptor stops streaming.

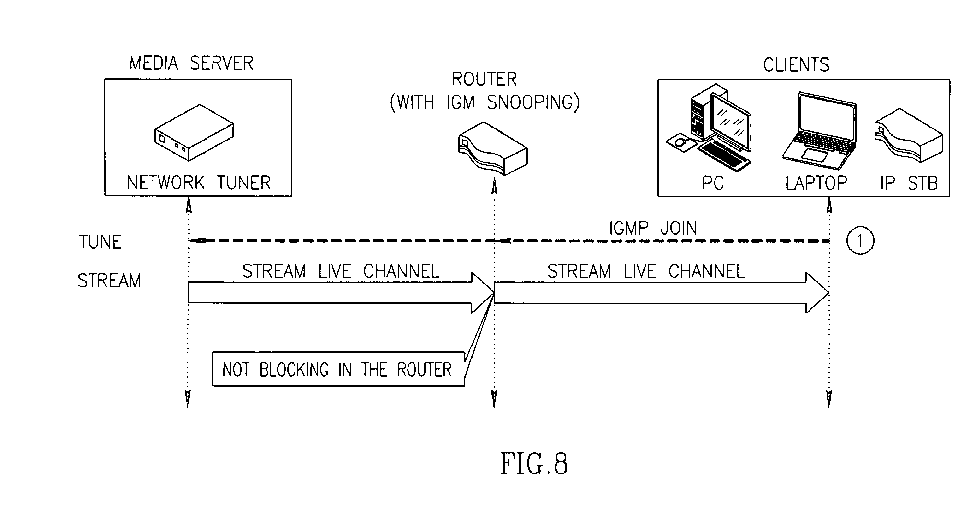

Reference is now made to Fig. 8, which illustrates using functional operations of IGMP (IPv4)/MLD (Multicast Listener Discovery) (IPv6) to trigger tuning for broadcast live TV and/or multicast streaming, in accordance with an embodiment of the present invention. In one embodiment of the invention, this tuner triggering can be done in conjunction with the personal TV gateway STB/router described above.

In this embodiment of the invention, the protocol is used as a triggering mechanism, not only to trigger the router to decide to whom to forward multicast streams, but additionally as a trigger in the live video/audio streaming (such as in Network Tuners, Media Streamers, Media Gateway and IPTV Servers) so that these devices postpone the actual streaming until after intercepting the JOIN request. Moreover, the devices can actually perform the tuning only when receiving the JOIN request. This significantly reduces the usage of resources such as CPU and network bandwidth on the streamer. It also eliminates the need to use other control protocols, such as RTSP (Real Time Streaming Protocol), UPNP (Universal Plug and Play) or proprietary protocol (although it can coexist with them in parallel), thus enabling transparent integration with existing STBs and applications that work with IP multicast streams.

The live TV gateway (Network Tuner) can maintain a list of multicast addresses with specific tuning information for each address (such as frequency, modulation, service ID, etc.), and perform tuning according to the list by intercepting specific multicast address JOIN requests. In this manner, the network tuner does not need additional control messages to tune before streaming.

It will be appreciated by persons skilled in the art that the present invention is not limited by what has been particularly shown and described hereinabove. Rather the scope of the present invention includes both combinations and subcombinations of the features described hereinabove as well as modifications and variations thereof which would occur to a person of skill in the art upon reading the foregoing description and which are not in the prior art.

## Claims

1. A method for routing TV content comprising:
using a personal TV gateway STB (set-top box)/router to route a first TV content to a first TV receiver located in a first location in a home, while simultaneously routing a second TV content to a second TV receiver located in a second location in said home; and
commanding said personal TV gateway STB/router to transfer the first TV content from the first TV receiver in the first location to a mobile personal communication device, while still controlling routing the second TV content to the second TV receiver located in the second location.

2. The method according to claim 1, further comprising, in addition to transferring the first TV content from the first TV receiver to said mobile personal communication device, turning off the first content at the first TV receiver.

3. The method according to claim 1, further comprising transferring the first content from the mobile personal communication device to another TV receiver in said home.

4. The method according to claim 1, wherein said personal TV gateway STB/router comprises a DVB (Digital Video Management) CA-DRM (Conditional Access- Digital Rights Management) engine in communication with a multiple tuner and with a media network processor, and wherein said DVB CA-DRM engine receives the TV contents from the multiple tuner or other TV content sources, communicates TV contents to the media network processor, and the media network processor is used to transfer the first TV content from the first TV receiver in the first location to the mobile personal communication device, while still controlling routing the second TV content to the second TV receiver located in the second location.

5. The method according to claim 1, further comprising using functional operations of IGMP (Internet Group Management Protocol) to trigger tuning of at least one of said first and second TV contents for broadcasting live TV or multicast streaming.

6. The method according to claim 5, wherein triggering tuning comprises postponing actual streaming until after intercepting a JOIN request.

7. The method according to claim 5, wherein triggering tuning comprises maintaining a list of multicast addresses with specific tuning information for each address and performing tuning according to the list by intercepting specific multicast address JOIN requests.
